# EUROPEAN PATENT APPLICATION

(11) **EP 4 718 400 A1**
(43) Date of publication of application: **01.04.2026**
(21) Application number: 25203262.8
(22) Date of filing: 19.09.2025
(51) Int. Cl.: G06V 40/10, G06V 40/20

(54) **MONOCULAR HAND TRACKING**

(30) Priority: 27.09.2024 US 202463700532 P; 16.09.2025 US 202519330038
(71) Applicant: Apple Inc., Cupertino, CA 95014 (US)
(72) Inventor: GARCES, Pablo Caballero, Cupertino, 95014 (US); MOSTAFA, Eslam A., Cupertino, 95014 (US); CLIFFORD, Timothy M., Cupertino, 95014 (US)
(74) Representative: Zacco Denmark A/S

(57) **Abstract**

Various implementations use one or more images from a single camera and enrolled hand data to predict a three-dimensional (3D) position and configuration of a hand. The enrollment data may provide information about 3D hand shape and size (e.g., fixed/actual distances between joints). Such information may facilitate determining depth and other 3D characteristics for the 3D position and configuration using images from a single camera (i.e., using a 2D image from a single camera and without requiring triangulation using live images from multiple cameras or multiple viewpoints). The hand's 3D position and configuration may be represented in a way (e.g., a format) that is appropriate for Bayesian optimization. Some implementations may use (e.g., fit) a predetermined hand shape/size with the captured image data to predict the hand's 3D position and configuration.

## Description

### TECHNICAL FIELD

The present disclosure generally relates to detecting and interpreting user activities involving hand gestures and other movements during use of electronic devices.

### BACKGROUND

Existing user interaction systems may be improved with respect to efficiently and effectively facilitating interactions based on user activities including finger and other hand gestures and movements.

### SUMMARY

Various implementations disclosed herein include devices, systems, and methods that use an image from a single camera and enrolled hand data to predict a three-dimensional (3D) position and configuration of a hand. The enrollment data may provide information about 3D hand shape and size (e.g., fixed/actual distances between joints). The enrollment data may facilitate determining depth and other 3D characteristics for the 3D position and configuration using an image from only a single camera, e.g., using a 2D image from a single camera and without requiring triangulation using images from multiple cameras or multiple viewpoints)

The enrolled data may provide a model of the hand, e.g., joints connected by bones, where the bones have sizes determined based on the user's actual hand as detected during the enrollment and the joints can be parameterized (e.g., with specified rotations, positions, etc.) based on the image data. The hand's 3D position and configuration may be represented in a way (e.g., using a model format) that is appropriate for Bayesian optimization (e.g., C2 continuous, linear (or spherical linear) for each component, for example, using a pose encoding that uses 35 angles for hand joints, 4 floating-point numbers for wrist rotation (e.g., quaternion), and 3 floating-point numbers for wrist translation (e.g., xyz values)).

In some implementations, a hand model having bone sizes determined from a prior user enrollment is used in a two-step process that (a) first uses image data from a single camera (e.g., a 2D image) to determine a current configuration and rotation for the hand model (i.e., a posed hand model) and (b) then the posed hand model (in this current configuration/rotation) is fitted against the image data from the single camera (e.g., a 2D image) to determine a 3D position of the hand. The process may involve predicting hand joint info (e.g., rotation angles) and/or information about the rotation of the entire hand, wrist joint, etc. This may provide a current configuration and rotation for the hand model (i.e., the posed hand model), which is then used to determine the 3D position of the hand. The process may provide information about the distance of the hand from the camera (e.g., wrist 3D position), which may be more uncertain in single camera scenarios (e.g., involving a 2D image) than scenarios in which live images from multiple cameras are available to enable depth determinations based on triangulation. Some implementations may utilize filtering (e.g., Kalman states) for smoothing and/or to treat scenarios specially when camara-based predictions deviate significantly from those expected from motion tracking (e.g., using past predictions to predict motion).

In some implementations, a processor performs a method by executing instructions stored on a computer readable medium. The method involves obtaining live data comprising one or more images from only a single camera (e.g., a 2D image) of the electronic device, the one or more images depicting a hand of a user at one or more points in time. For example, this may involve an outward facing camera on a head-mounted device (HMD) or extended reality (XR) glasses capturing one or more images. The process may involve a camera capturing a live video stream of images, for example, during an XR experience. The one or more images may be cropped to focus on portions depicting the hand.

The method involves obtaining enrollment data corresponding to hand size, wherein the enrollment data is based on sensor data regarding the hand portion of the user obtained prior to the live data being obtained. The enrollment data may include information on hand size/dimensions, which may provide fixed/actual distances between joints. The enrollment data may be determined based on an enrollment in which multiple cameras and/or depth sensors are used (e.g., more sensors than the single camera used to capture the live data (e.g., a 2D image)) to generate a 3D model of the user's hand).

The method further involves determining parameters for a hand representation (e.g., a posed hand model) based on the live data and the enrollment data, wherein the parameters comprise rotation parameter values corresponding to hand joints and hand pose parameter values corresponding to hand pose/rotation. The rotation parameters values corresponding to hand joints, for example, may provide 35 angles for hand joints of hand model. The hand pose parameters corresponding to hand pose/rotation may provide data representing hand 3D position and orientation, e.g., 4 floating-point numbers for wrist rotation (e.g., quaternion) and 3 floating-point numbers for wrist translation (e.g., xyz values)).

The method may involve determining a 3D position and configuration of the hand based on the parameters of the hand representation. This may involve fitting a posed hand model to image data from the single camera (e.g., matching keypoints) to determined a 3D position of the hand.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment, in accordance with some implementations.
Figure 2 illustrates views, provided via a device, of virtual elements within the 3D physical environment of Figure 1 in which the user performs a direct interaction, in accordance with some implementations.
Figure 3 illustrates views, provided via a device, of virtual elements within the 3D physical environment of Figure 1 in which the user performs an indirect interaction, in accordance with some implementations.
Figure 4 illustrates an exemplary hand model in accordance with some implementations.
Figure 5 illustrates an exemplary process for determining hand/wrist position based on fitting live image data from a single camera with enrollment-based hand data, in accordance with some implementations.
Figure 6 illustrates an exemplary process for determining 3D position and configuration of a hand in accordance with some implementations.
Figures 7A-C illustrate examples of using motion predictions to determine whether and how to adjust hand position and configuration determinations, in accordance with some implementations.
Figures 8A-C illustrate examples of using motion predictions to determine if, and when, to adjust hand position and configuration determinations, in accordance with some implementations.
Figure 9 is a flowchart illustrating a method for determining 3D position and configuration of a hand, in accordance with some implementations.
Figure 10 is a block diagram of an electronic device, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

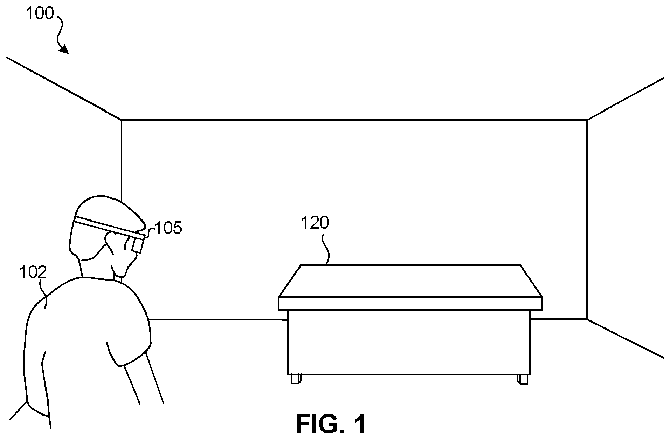

Figure 1 illustrates an exemplary electronic device 105 operating in a physical environment 100. In the example of Figure 1, the physical environment 100 is a room that includes a desk 120. The electronic device 105 may include one or more cameras, microphones, depth sensors, or other sensors that can be used to capture information (e.g., images, sound, lighting characteristics, etc.) about and evaluate the physical environment 100 and the objects within it, as well as information about the user 102 of electronic device 105. The information about the physical environment 100 and/or user 102 may be used to provide visual and audio content and/or to identify the current location of the physical environment 100 (e.g., including locations of objects, such as the desk 120, in the physical environment 100) and/or the location of the user within the physical environment 100.

In some implementations, views of an extended reality (XR) environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that are generated based on camera images and/or depth camera images of the physical environment 100, as well as a representation of user 102 based on camera images and/or depth camera images of the user 102. Such an XR environment may include virtual content that is positioned at 3D locations relative to a 3D coordinate system (i.e., a 3D space) associated with the XR environment, which may correspond to a 3D coordinate system of the physical environment 100.

In some implementations, video (e.g., pass-through video depicting a physical environment) is received from an image sensor of a device (e.g., device 105 or device 110). In some implementations, a 3D representation of a virtual environment is aligned with a 3D coordinate system of the physical environment. A sizing of the 3D representation of the virtual environment may be generated based on, for example, a scale of the physical environment or a positioning of an open space, floor, wall, etc., such that the 3D representation is configured to align with corresponding features of the physical environment. In some implementations, a viewpoint (e.g., of the user 102) within the 3D coordinate system may be determined based on a position of the electronic device within the physical environment. The viewpoint may be determined based on, for example, image data, depth sensor data, motion sensor data, etc., which may be retrieved via a virtual inertial odometry system (VIO), a simultaneous localization and mapping (SLAM) system, etc.

In some implementations, views of an XR environment are provided via an HMD (e.g., AR glasses) that includes a see-through display, wherein virtual content is presented within the views. For example, such a device may comprise one or more lenses through which the user 102 observes the physical environment 100 and a presentation component (e.g., one or more light sources and/or one or more waveguides) that cause virtual content to be viewed by the user within the views seen through the one or more lenses.

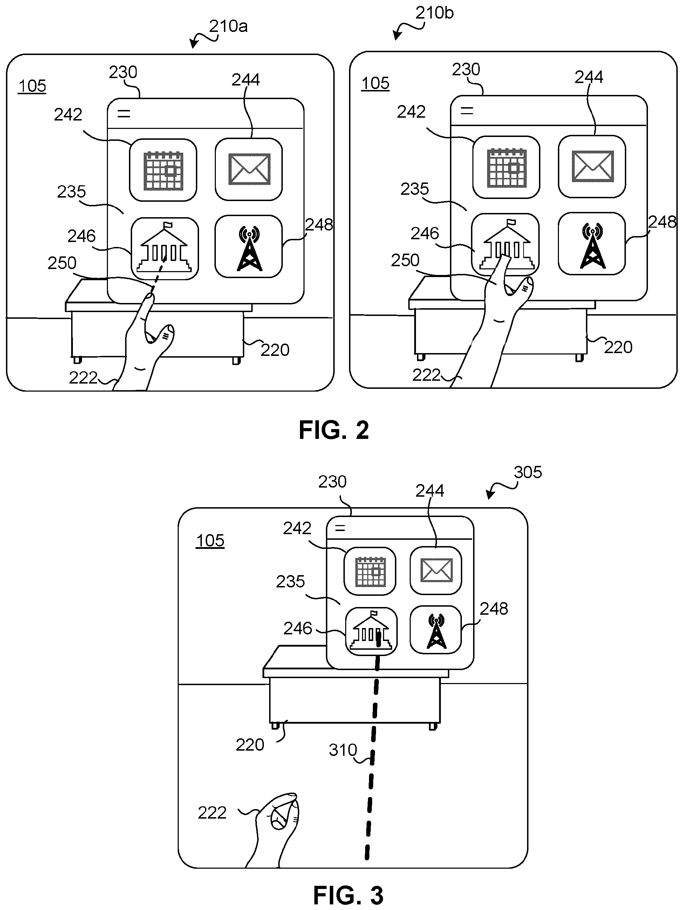

**Figure 2** illustrates views, provided via a device, of virtual elements within the 3D physical environment of Figure 1 in which the user performs a direct interaction. In this example, the user 102 makes a hand gesture relative to content presented in views 210a-b of an XR environment provided by a device (e.g., device 105). The views 210a-b of the XR environment include an exemplary user interface 230 of an application (e.g., an example of virtual content) and a depiction 220 of the desk 120 (i.e., an example of real content). As an example, in Figure 2, the user interface 230 is a two-dimensional virtual object (e.g., having a flat front-facing surface). Providing such a view may involve determining 3D attributes of the physical environment 100 above (e.g., a position of the desk 120 in the physical environment 100, a size of the desk 120, a size of the physical environment 100, etc.) and positioning the virtual content, e.g., user interface 230, in a 3D coordinate system corresponding to that physical environment 100.

In the example of Figure 2, the user interface 230 includes various content items, including a background portion 235 and icons 242, 244, 246, 248. The icons 242, 244, 246, 248 may be displayed on the flat user interface 230. The user interface 230 may be a user interface of an application, as illustrated in this example. The user interface 230 is simplified for purposes of illustration and user interfaces in practice may include any degree of complexity, any number of content items, and/or combinations of 2D and/or 3D content. The user interface 230 may be provided by operating systems and/or applications of various types including, but not limited to, messaging applications, web browser applications, content viewing applications, content creation and editing applications, or any other applications that can display, present, or otherwise use visual and/or audio content.

In this example, the background portion 235 of the user interface 230 is flat. In this example, the background portion 235 includes all aspects (e.g., visual characteristics) of the user interface 230 being displayed except for the icons 242, 244, 246, 248. Displaying a background portion of a user interface of an operating system or application as a flat surface may provide various advantages. For example, doing so may provide an easy to understand or otherwise use portion of an XR environment for accessing the user interface of the application. In some implementations, multiple user interfaces (e.g., corresponding to multiple, different applications) are presented sequentially and/or simultaneously within an XR environment using one or more flat background portions, though other configurations are possible.

In some implementations, the positions and/or orientations of such one or more user interfaces may be determined to facilitate visibility and/or use. The one or more user interfaces may be at fixed positions and orientations within the 3D environment. In such cases, user movements would not affect the position or orientation of the user interfaces within the 3D environment (e.g., such that the user interfaces remain at their respective positions or orientations and do not move relative to the viewpoint of the user).

The position of the user interface within the 3D environment may be based on determining a distance of the user interface from the user (e.g., from an initial or current user position). The position and/or distance from the user may be determined based on various criteria including, but not limited to, criteria that accounts for application type, application functionality, content type, content/text size, environment type, environment size, environment complexity, environment lighting, presence of others in the environment, use of the application or content by multiple users, user preferences, user input, and other factors.

In some implementations, the one or more user interfaces may be body-locked content, e.g., having a distance and orientation offset relative to a portion of the user's body (e.g., their torso). For example, the body-locked content of a user interface could be 0.5 meters away and 45 degrees to the left of the user's torso's forward-facing vector. If the user's head turns while the torso remains static, a body-locked user interface would appear to remain stationary in the 3D environment at 0.5m away and 45 degrees to the left of the torso's front facing vector. However, if the user does rotate their torso (e.g., by spinning around in their chair), the body-locked user interface would follow the torso rotation and be repositioned within the 3D environment such that it is still 0.5 meters away and 45 degrees to the left of their torso's new forward-facing vector.

In other implementations, user interface content is defined at a specific distance from the user with the orientation relative to the user remaining static (e.g., if initially displayed in a cardinal direction, it will remain in that cardinal direction regardless of any head or body movement). In this example, the orientation of the body-locked content would not be referenced to any part of the user's body. In this different implementation, the body-locked user interface would not reposition itself in accordance with the torso rotation. For example, a body-locked user interface may be defined to be 2m away and, based on the direction the user is currently facing, may be initially displayed north of the user. If the user rotates their torso 180 degrees to face south, the body-locked user interface would remain 2m away to the north of the user, which is now directly behind the user.

A body-locked user interface could also be configured to always remain gravity or horizon aligned, such that head and/or body changes in the roll orientation would not cause the body-locked user interface to move within the 3D environment. Translational movement, on the other hand, would cause the body-locked content to be repositioned within the 3D environment in order to maintain the distance offset.

In the example of Figure 2, the user 102 moves their hand from an initial position as illustrated by the position of the depiction 222 of the hand in view 210a. The hand moves along path 250 to a later position as illustrated by the position of the depiction 222 in the view 210b. As the user 102 moves their hand along this path 250, the finger intersects the user interface 230. Specifically, as the finger moves along the path 250, it virtually pierces the icon 246 in the user interface 230 and thus a tip portion of the finger (not shown) is optionally occluded in view 210b by the user interface 230 from the viewpoint of the user.

Implementations disclosed herein track 3D positions and configurations of a hand over time for various reasons including, but not limited to, to interpret user movements such as the user 102 of Figure 1 moving their hand / finger to provide a direct interaction with virtual content, e.g., moving they hand/finger along path 250 relative to a user interface element such as icon 246 in the user interface 230, to recognize user input/interactions. The interpretation of user movements and other user activity may be based on recognizing user intention using multiple, potentially separate, recognition processes corresponding to different input modalities. Using multiple, potentially separate, recognition processes for different modalities may improve functionality, accuracy, efficiency, and/or provide other device-based or interactionbased benefits.

Recognizing input in the example of Figure 2 may involve determining that a gesture is a direct interaction and then using a direct input recognition process to recognize the gesture. For example, such a gesture may be interpreted as a tap input directed to the icon 246.

Note that the user's movement in the real world (e.g., physical environment 100) correspond to movements within a 3D space, e.g., an XR environment that is based on the real-world and that includes virtual content such as user interface positioned relative to real-world objects including the user. Thus, the user is moving his hand in the physical environment 100, e.g., through empty space, but that hand (i.e., a depiction or representation of the hand) intersects with and/or pierces through the user interface 230 of the XR environment that is based on that physical environment. In this way, the user virtually interacts directly with the virtual content.

**Figure 3** illustrates an exemplary view, provided via a device, of virtual elements within the 3D physical environment of Figure 1 in which the user performs an indirect interaction. In this example, the user 102 makes a hand gesture while looking at (e.g., while the gaze of the user 102 is directed toward) content presented in the view 305 of an XR environment provided by a device (e.g., device 105 or device 110). The view 305 of the XR environment includes the exemplary user interface 230 of Figure 2. In the example of Figure 3, the user 102 makes a pinching gesture with their hand as illustrated by the depiction 222 while gazing along gaze direction path 310 at user interface icon 246. In this example, this user activity (e.g., a pinching hand gesture along with a gaze directed at a UI element) corresponds to a user intention to interact with user interface icon 246.

Implementations disclosed herein track 3D positions and configurations of a hand over time for various reasons including, but not limited to, to interpret user activity, such as the user 102 forming a pinching hand gesture, a pointing gesture, etc., to recognize user/interactions. For example, a pinch user activity may be interpreted as a tap input directed to the icon 246, e.g., selecting icon 246 in the user interface 230, which causes the device to activate the icon 246 and optionally display content (e.g., a user interface) corresponding to the icon 246.

### Monocular Hand Pose Detection

Some implementations disclosed herein relate to monocular hand pose detection and/or tracking, e.g., determining and/or tracking the configuration, position, and/or orientation of a hand in 3D using a 2D image from a single camera (i.e., using a 2D image from a single camera and without requiring triangulation using images from multiple cameras or viewpoints). Some implementations use limited information (e.g., a single image sensor's RGB image or a single sensor's RGB plus depth (RGBD) image) to determine and/or track hand configuration and/or pose. The hand configuration/pose detection may be accomplished by obtaining prior information about the user's hand (e.g., enrollment data) that corresponds to the user's 3D hand shape and/or size, e.g., the sizes of bones connecting joints of a 3D model that will represent the hand. This may occur prior to a user experience, e.g., during an enrollment period.

As used herein "enrollment" is used to refer to any experience prior to a current experience during which the current hand information is obtained. Enrollment may provide information about a user's hand that is not available during subsequent hand pose detection and/or tracking, e.g., information about hand size, shape, etc., and thus may provide information that is useful in enabling hand pose detection and/or tracking using less information than would otherwise be needed, e.g., enabling such detection/tracking using a 2D image from a single camera and/or without requiring images from multiple cameras or multiple viewpoints for triangulation. In one example, a user uses a separate device having multiple cameras to perform a hand enrollment. In another example, the user uses a single device (for both enrollment and subsequent experiences in which hand detection/tracking occurs) but obtains more information about the hand during enrollment than is available during the subsequent experiences, e.g., using more cameras or other sensors, capturing data for a longer period of time, capturing data from more viewpoints, providing user input, etc.

Various implementations disclosed herein include devices, systems, and methods that use one or more images from a single camera (e.g., a 2D image) and enrolled hand data to predict a 3D position and configuration of a hand. The enrollment data may provide information about 3D hand shape and size (e.g., fixed/actual distances between joints of a hand model). The enrollment data may facilitate determining depth and other 3D characteristics for the 3D position and configuration using images from only a single camera (e.g., a 2D image). During a hand tracking experience (e.g., after enrollment and during hand tracking), image data (e.g., from a single outward facing camera on an HMD) is captured and information identified in the image is used along with the prior hand information to determine the 3D hand configuration and position.

Some implementations use captured image data to identify information about specific points on a hand model (e.g., rotation angles of particular hand points / joints) and/or information about entire hand / wrist joint rotation. This information may be fit to the prior enrollment data and such fitting may help determine the distance of the hand from the camera and thus better determine the hand's pose.

The hand's 3D position and configuration may be represented in a way (e.g., a format/model) that is appropriate for Bayesian optimization (e.g., C2 continuous, linear (or spherical linear) for each component, for example, using a pose encoding that uses 35 angles for hand joints, 4 floating-point numbers for wrist rotation (e.g., quaternion), and 3 floating-point numbers for wrist translation (e.g., xyz values)).

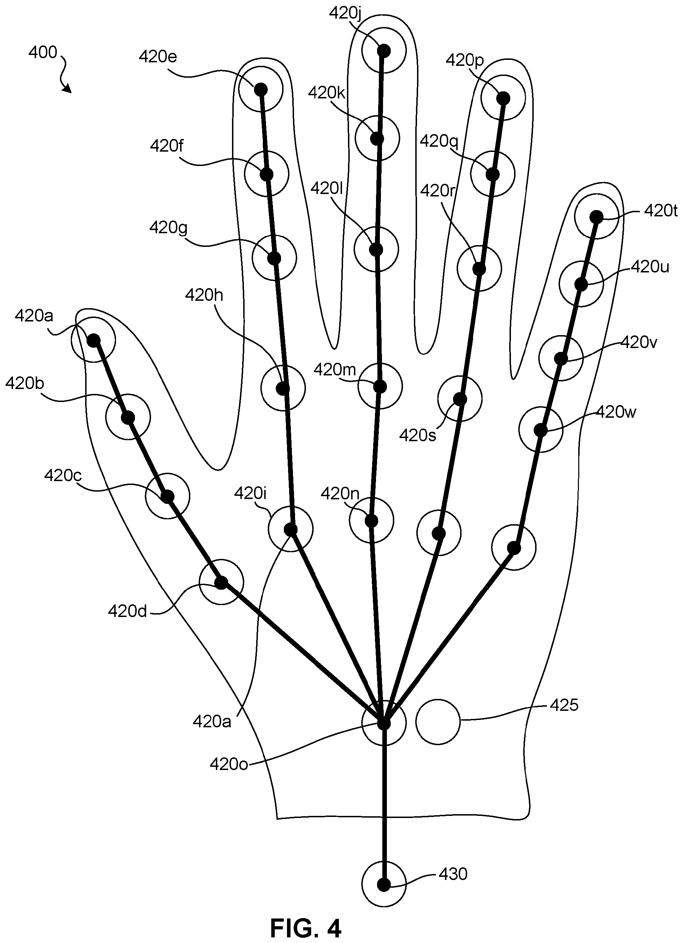

**Figure 4** illustrates an exemplary hand model 400 in accordance with some implementations. In this example, the hand is modeled using various joints 420a-w, 425, 430. The joints may have different characteristics, e.g., a first set of joints 420a-w may be encoded using angles representing hand joint angles, while wrist joint 425 and wrist joint 430 may have 3D positions associated with (e.g., xyz positions) that specify the hands overall position and/or orientation in the physical environment. Wrist joint 425 may represent wrist rotation (e.g., pointing down the arm). In this example, there is a root at the wrist and the arm is able to bend relative to the wrist as specified by the wrist joints.

Some implementations provide hand data in a format that is appropriate for Bayesian optimization. Such a format may be C2 continuous, linear (or spherical linear) for each component. Such a format may be used to specify the following:

```
      Class ArvingRig():
            pose encoding # 35 floats
            hand_scale
            bone_scale
            wrist_rotation
            wrist_translation
            is_left
```

In one exemplary implementation, a hand model provides a hand pose encoding that comprises 35 angles scaled between -1 and 1 for min and max range, 4 floating-point number values for wrist rotation (quaternion), and 3 floating-point number values for wrist translation (e.g., xyz). Such an encoding may allow for calculating velocity and acceleration of each term. The process may be configured such that uncertainty from the process (e.g., neural network) is produced in the form of output that can be evaluated and/or combined. The process may be configured to provide a specific mathematical meaning of "standard deviation," which may facilitate combining results in a mathematically optimal way.

In some implementations, a hand's 3D position and configuration (e.g., finger positions, 3D hand shape, positions of joints of a j oint-based representation of the 3D shape of the hand, etc.) is determined by first using image data (e.g., from a single live camera) to determine hand joint rotations for a hand model and/or hand rotation information of the hand model, e.g., the hand model size coming from enrollment data and the angles/rotations for the particular/current hand configuration coming from the live image data. The determined hand joint / hand rotation information corresponding to the hand's current configuration (i.e., a posed hand model) is then fit to the image data, e.g., matching key points on the hand in that configuration to key points on the hand observed in the image data (e.g., from the single live camera). Such fitting may provide information about depth and/or scale, e.g., how far way the hand is from the camera position and thus facilitate determining the 3D position of the hand and/or an anchor point on the hand (e.g., a wrist location).

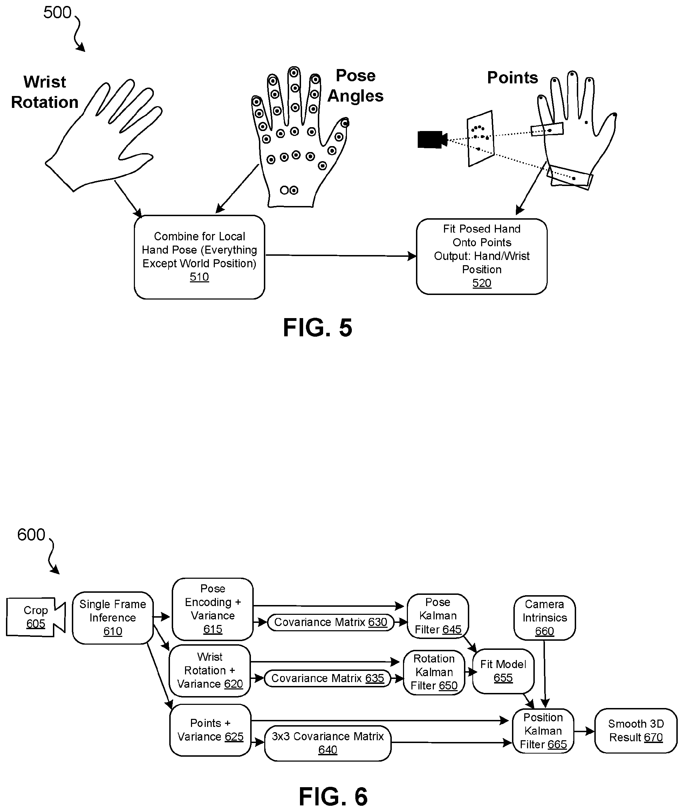

**Figure 5** illustrates an exemplary process for determining hand/wrist position based on fitting live image data from a single camera with enrollment-based hand data. The process 500 involves combining wrist rotation and pose angles for hand joints information (block 510) (i.e., providing a posed hand model) and then fitting that with image data to determine hand/wrist position (block 520) (i.e., fitting the posed hand model with the current image data). Block 510 may involve determining wrist rotation values (e.g., for joints corresponding to wrist rotation of a hand model) and/or pose angles (e.g., for joints corresponding to hand joint rotations of the hand model). For block 520, UVD points may be determined, e.g., each UVD point having u, v, and depth uncertainty as a ray from the camera. In some implementations, a perspective-n-point (PnP) process may be solved to provide rotation and position. This may require an iterative solve if solving for both rotation and position. However, it may be solved in closed form, where the process is configured to solve for position, but not rotation. The process 500 produces output that identifies the 3D position of the hand, e.g., the 3D position of the wrist.

**Figure 6** illustrates an exemplary process 600 for determining 3D position and configuration of a hand. In this example, an image is captured by a camera (e.g., on an HMD) and a portion of the image is identified as depicting a hand at block 605 (e.g., a crop). The cropped portion of the image is provided to single frame inference block 610, and pose encoding and variance 615, wrist rotation and variance 620, and points and variance 625 are produced.

The pose encoding and variance 615 may provide hand joint rotation values for hand joints of a hand model corresponding to the configuration of the hand (e.g., being held out flat, pointing one or more fingers, pinching, forming a fist, etc.). The pose encoding and variance 615 may be filtered through a pose Kalman filter 645. The pose encoding and variance 615 may be generated via an algorithm or machine learning model.

The wrist rotation and variance 620 may provide hand/wrist rotation values for joints of a hand model corresponding to hand/wrist rotation (e.g., corresponding to the hands overall orientation). The wrist rotation and variance 620 information may be filtered through a rotation Kalman filter 645. The wrist rotation and variance 620 may be generated via an algorithm or machine learning model.

These processes may involve using an algorithm or other process (e.g., a machine learning process) that inputs a single cropped image (e.g., cropped around the hand). The outputs may include, but are not limited to: floats (e.g., 35) for Euler angles (which represents the different degrees of freedom in a hand pose), floats (e.g., 35) for standard deviation of each of those angles, floats (e.g., 4) for wrist rotation (quaternion), floats (e.g., 1) for the standard deviation to the near direction to the gt rotation, 3d floats (e.g., 8) representing the pixel and scaled depth (relative to the depth used to generate the crop; 3d floats (e.g., 8) representing the standard deviation through those points, bone lengths (e.g., 27); and/or standard deviations for the bone lengths (e.g., 27). In some implementations, a learning-based process is used, e.g., one or more neural networks. Such a process may involve training using images and labels from a separate process that provide ground truth values for the parameters (e.g., the parameters described above). The training may involve a gaussian loss that facilitates predicting each value and uncertainty of each value. Losses may be in standard devotion units, so can be simply added without extra hyper parameters. The process may involve a VIT transformer and/or HrNet back bone.

The filtered pose encoding and variance 615 (potentially including covariance matrix 630) and filtered wrist rotation and variance 620 (potentially including covariance matrix 635) may be combined together, along with hand size and/or shape information represented in a hand model (e.g., from an enrollment process), to provide wrist rotation and pose angles for hand joints information - providing a posed hand model. The posed hand model provides a 3D model with rotations and joint positions corresponding to both the user's hand shape/size and the user's current hand configuration and overall rotation. The posed hand model may then be used with the points and variance 625 (potentially including covariance matrix 640) and camera intrinsics 660 at position Kalman filter block 665 to determine 3D hand position and/or configuration, providing a smooth 3D result. The Kalman filters (e.g., pose Kalman filter 645, rotation Kalman filter 650, and position Kalman filter 665) may utilize information over time to ensure temporal smoothness in the 3D hand position and/or configuration results. Camera intrinsics may be used to project UVD points (pixel u,v in crop and depth relative to the estimated depth used to generate the crop size.) into Euclidian 3d space. Camera intrinsics may also be used to project the UVD standard deviations are rotated and projected along the ray from the camera to the point on the hand. Variance/covariance may be input used when updating Kalman state with a new measurement. Generally, this is a constant based on what the input source is. The process may instead use the per frame prediction from the network, which may allow it to weight update amounts based on confidence.

Over time, a series of hand 3D positions and configuration information (e.g., position, velocity, acceleration, etc.) may be determined. Such determinations may be tracked and used to estimate user movements that occurred over time, e.g., the user moving a pointing finger forward and then retracting it, etc. Such determinations may be used to predict subsequent user hand positions and configurations, e.g., and thus used as a check on future 3D hand positions and configuration determinations. This may involve implementing one or more adaptive Kalman filters to ensure smooth and confident tracking.

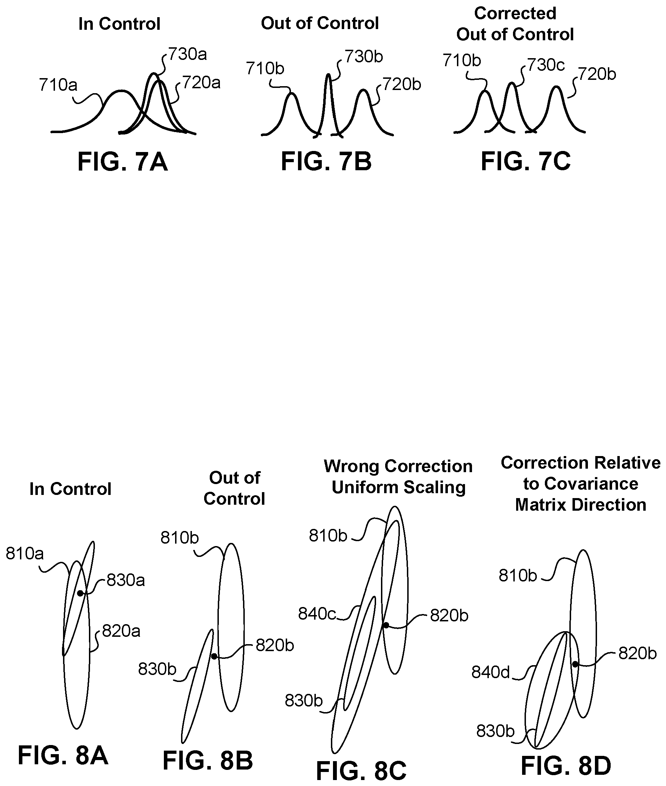

**Figures 7A-C** illustrate examples of using motion predictions to determine whether and how to adjust hand position and configuration determinations over time. In Figure 7A, a hand position prediction 710a and motion model-based hand prediction 720a are graphically illustrated. The hand position prediction 710a may be based on analyzing a current image of the hand, e.g. via the processes described with respect to Figure 5. The motion model-based hand prediction 720a may be based on analyzing prior determination of hand position and/or configuration to predict future motion of the hand. This may be based on a motion model (e.g., a constant acceleration motion model).

The combined prediction 730a combines these results (e.g., via averaging, weighted averaging, etc.). Figure 7A illustrates an "in control" result in which the combined prediction 730a is within 2 standard deviations of the hand position prediction 710a. Since it is within a threshold (e.g., the 2 standard deviations), the combined prediction 730a is used without correction.

In Figures 7B and 7C, a hand position prediction 710b and motion model-based hand prediction 720b are graphically illustrated. In contrast to Figure 7A, Figure 7B illustrates an "out of control" result in which the combined prediction 730b is outside of the threshold (i.e., outside of 2 standard deviations) of the hand position prediction 710b. It shows a result in which the combined prediction 730b does not agree with the hand position prediction 710a or the motion-based prediction 720b and the variance suggests relatively high confidence of the result. To correct this, the system may assume that the motion model (e.g., a constant acceleration motion model) does not represent the current state. It may increase the variance values (e.g., values in the co-variance matrix of the current state so that the combined result is closer (e.g., within 2 standard deviations of the prediction). Thus, as illustrated in Figure 7C, the corrected combined result 730c is adjusted to be at the 2^{nd} standard deviation of the hand position prediction 710b. This may function like a dead-zone filter, only reducing/altering the motion model uncertainty if the prediction disagrees. Such filtering may be employed using different degrees of freedom for wrist rotation/joint rotation and wrist position, e.g., 1D for wrist rotation and joint rotation and 3D for wrist position.

**Figures 8A-C** illustrate further examples of using motion predictions to determine if, and when, to adjust hand position and configuration determinations. The process may account for the fact that wrist covariance may not be uniform. The process may account for circumstances in which there is significant uncertainty, e.g., regarding depth in the direction from camera to hand. Multiple observations may be combined, leading to a 3x3 covariance matrix for position (9x9 if including velocity and acceleration). Direction may additionally be taken into account in determining motion model uncertainty. In Figure 8A, the uncertainty limit 810a of a hand position prediction 820a and uncertainty limit 830a of a motion model-based hand prediction are graphically illustrated. Since the hand position prediction 820a is within the uncertainty limit 810a of the hand position prediction 820a, the result is considered to be "in control." In Figure 8B, the uncertainty limit 810b of a hand position prediction 820b and uncertainty limit 830b of a motion model-based hand prediction are graphically illustrated. Since the hand position prediction 820b is not within the uncertainty limit 810b of the hand position prediction 820b, the result is considered to be "out of control." Figure 8C illustrates an erroneous correction using uniform scaling, providing uncertainty limit 840C. Figure 8D illustrates a correction relative to the covariance matrix direction, providing uncertainty limit 840d. Uniform scaling may be employed. The covariance matrix may be scaled separately along the direction of uncertainty.

Some implementations disclosed herein use enrolled user data to provide information about a user's hand that facilitate subsequently determining 3D hand position and configuration using one or more images from a single camera (e.g., a 2D image). Multiple cameras may be used, but may not be necessary, given this additional user information provided by the enrolled user data. Some implementations utilize enrolled bone lengths (for a hand model) to provide hand shape having correct size. Enrolled bone lengths may be used to predict rotations (e.g., predict hand model joint rotations, with uncertainties). This may avoid the need for predicting bone lengths after enrollment, e.g., bone lengths can be treated as predetermined constants. Enrolled bone lengths may additionally or alternatively be applied to rotation outputs to determine a local hand pose, e.g., the overall rotation/orientation of the user's hand/wrist. Enrollment information may additionally or alternatively provide useful changes regarding rotation supervision in a supervised determination process, e.g., enabling use of a simpler representation (e.g., a 42-dimensional kinematic representation), and/or to directly supervise the rotations via targeted loss functions in a machine learning process. The use of hand enrollment data may provide numerous benefits including, but not limited to, enabling faster convergence, reducing uncertainties in rotation space, guaranteeing correct hand size, and/or guaranteeing constant bone lengths.

Some implementations disclosed herein fit, align, or otherwise use a posed hand model (e.g., determined based on enrollment data and current image data) to predict hand/joint positions. This may involve, for example, aligning a hand model's components (e.g., joints) to 3D keypoints to solve for wrist attributes. For example, this may involve predicting keypoints in 3D with full covariance. Note that typical uncertainty will be larger in the "d" direction than u,v. However, higher uncertainty ("d" direction errors) may play less of a role in hand-center predictions. The aligning may enable solving for wrist pose with 3D predictions of the keypoints and/or translating a local hand pose to a solved wrist. In some implementations, a Bayesian loss is used to determined 3D hand position and configuration. The process may additionally utilize loss for joint positions. Very uncertain joints (e.g., above a threshold uncertainty) may be ignored. A perspective-n-point (PnP) process may be used to solve for 3D position and rotation of an object given 3D key points. It may require an iterative solve to obtain an optimal solution. One alternative is to utilize a prediction (e.g., from an algorithm or machine learning model) to provide a rotation and only solve for position, which may provide a closed form solution that can be optimally solved for 3D position in one step.

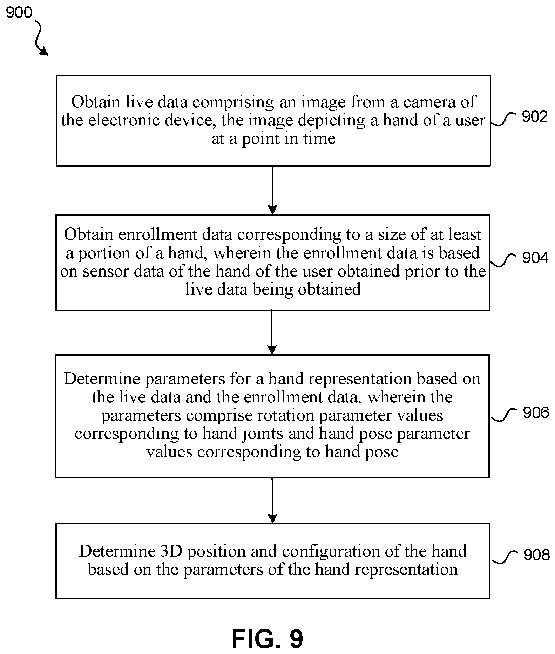

**Figure 9** is a flowchart illustrating an exemplary method for determining 3D position and configuration of a hand. In some implementations, a device such as electronic device 105 performs method 900. In some implementations, method 900 is performed on a mobile device, desktop, laptop, HMD, or server device. The method 900 is performed by processing logic, including hardware, firmware, software, or a combination thereof. In some implementations, the method 900 is performed on a processor executing code stored in a non-transitory computer-readable medium (e.g., a memory).

At block 902, the method 900 involves obtaining live data comprising an image from a camera of the electronic device, the image depicting a hand of a user at a point in time. In some implementations, obtaining the live data comprises an outward facing camera on an HMD or AR glasses capturing an image or video. The live data may be a single image or a stream of images.

At block 904, the method 900 involves obtaining enrollment data corresponding to a size of at least a portion of a hand, wherein the enrollment data is based on sensor data of the hand of the user obtained prior to the live data being obtained. The size of at least a portion of the hand may provide fixed distances between joints determined based on an enrollment. The enrollment data comprises fixed distances between the hand joints of the hand representation, the fixed distances determined based on the sensor data regarding the hand portion of the user obtained prior to the live data being obtained. Such an enrollment may involve a user experience in which multiple cameras and/or depth sensors are used (e.g., more sensors than during the live capture) to generate a 3D model of the user's hand. For example, the enrollment data is determined based on an enrollment in which: multiple cameras simultaneously capture the sensor data; or one or more cameras and a depth sensor simultaneously capture the sensor data.

The hand representation may have a format that enables Bayesian optimization using the live data and the enrollment data. The rotation parameter values may correspond to angles of hand joints. The hand pose parameter values correspond to hand 3D position and orientation. The hand pose parameter values correspond to wrist position and wrist rotation.

At block 906, the method 900 involves determining parameters for a hand representation based on the live data and the enrollment data, wherein the parameters comprise rotation parameter values corresponding to hand joints and hand pose parameter values corresponding to hand pose. The rotation parameters values corresponding to hand joints, for example, may provide 35 angles for hand joints of hand model. The hand pose parameters corresponding to hand pose may provide data representing hand 3D position and orientation, e.g., 4 floating-point numbers for wrist rotation (e.g., quaternion), and 3 floating-point numbers for wrist translation (e.g., xyz values)). Determining the parameters for the hand representation may involve fitting the live data and enrollment data. A 3D position of at least a portion of the hand may be determined based on such a fitting.

At block 908, the method 900 involves determining a 3D position and configuration of the hand based on the parameters of the hand representation This may involve directly determining 3D positions for each joint of a joint-based representation of the hand, e.g., 3D positions in a 3D coordinate system corresponding to the user's physical environment. Alternatively, this may involve determining a position of an anchor/reference point and an overall orientation associated with the hand (e.g., a position of a point on the wrist of the hand in a 3D coordinate system corresponding to the physical environment and data identifying the overall orientation of the hand relative to that anchor/reference point in that 3D coordinate system) and determining relative 3D positions of joints of a joint-based representation of the 3D configuration of the hand relative to such an anchor/reference point and overall hand orientation. In other words, the hand's overall 3D position and orientation can be represented by a single hand pose (e.g., anchor/reference point position and overall hand orientation). The hand's configuration (e.g., bending, finger positioning, etc.) may be represented using a hand representation (e.g., a joint-based representation) that specifies the relative positions of hand points (e.g., joints) and that hand representation may be positioned and orientated using the anchor/reference point and overall hand orientation in the 3D coordinate system of the user's environment. Once the anchor point's position and hand's overall orientation are known and the hand's current configuration represented by the relative positioning of the joints of hand representation is known, the 3D positions of those joints in the 3D coordinate system of the user's physical environment may be determined. In some implementations, only a 3D position of a hand in the 3D coordinate system of the user's environment is determined. In some implementations, only a hand configuration, e.g., 3D positions of joints of a hand representation, are determined. The method 900 may use a single camera capturing images of a user's hand to determine a position of a hand and the configuration of that hand (i.e., using a 2D image from a single camera and without requiring triangulation using live images from multiple cameras or viewpoints). The method 900 may involve determining 3D positions and configurations of the hand over time based on a sequence of image in the live data and the enrollment data. The method 900 may involve using one or more filters (e.g., Kalman state filters) to smooth the 3D positions and configurations determined for the hand over time. The method 900 may involve adjusting the determined 3D positions and configurations based on determining whether the 3D positions and configurations determined for the hand over time deviate (e.g., more than a threshold) from predictions based on motion tracking. The method 900 may treat scenarios specially when predictions deviate significantly from those expected from motion tracking (e.g., treating "in control" versus "out of control" differently as illustrated in Figures 7A-C and 8A-D).
While many examples described herein involve wearable electronic devices, such as HMDs, other implementations are contemplated. The techniques disclosed herein may additionally, or alternatively, be performed via other types of devices including, but not limited to, mobile phones, tablets, laptops, and/or any other device with a camera capable of capturing one or more images of a hand.

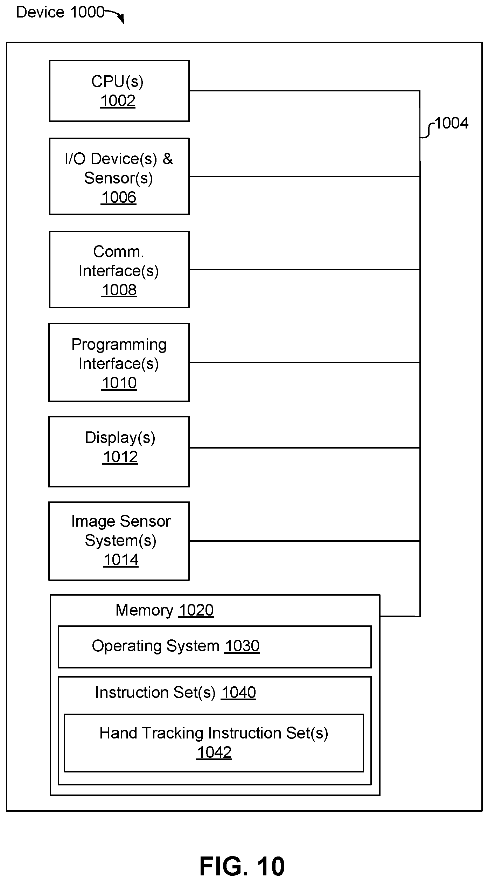

**Figure 10** is a block diagram of electronic device 1000. Device 1000 illustrates an exemplary device configuration for electronic device 105 or 110. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 1000 includes one or more processing units 1002 (e.g., microprocessors, ASICs, FPGAs, GPUs, CPUs, processing cores, and/or the like), one or more input/output (I/O) devices and sensors 1006, one or more communication interfaces 1008 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, SPI, I2C, and/or the like type interface), one or more programming (e.g., I/O) interfaces 1010, one or more output device(s) 1012 (e.g., including displays), one or more interior and/or exterior facing image sensor systems 1014, a memory 1020, and one or more communication buses 1004 for interconnecting these and various other components.

In some implementations, the one or more communication buses 1004 include circuitry that interconnects and controls communications between system components. In some implementations, the one or more I/O devices and sensors 1006 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more output device(s) 1012 include one or more displays configured to present a view of a 3D environment to the user. In some implementations, the one or more displays correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays correspond to diffractive, reflective, polarized, holographic, etc. waveguide displays. In one example, the device 1000 includes a single display. In another example, the device 1000 includes a display for each eye of the user.

In some implementations, the one or more output device(s) 1012 include one or more audio producing devices. In some implementations, the one or more output device(s) 1012 include one or more speakers, surround sound speakers, speaker-arrays, or headphones that are used to produce spatialized sound, e.g., 3D audio effects. Such devices may virtually place sound sources in a 3D environment, including behind, above, or below one or more listeners. Generating spatialized sound may involve transforming sound waves (e.g., using head-related transfer function (HRTF), reverberation, or cancellation techniques) to mimic natural soundwaves (including reflections from walls and floors), which emanate from one or more points in a 3D environment. Spatialized sound may trick the listener's brain into interpreting sounds as if the sounds occurred at the point(s) in the 3D environment (e.g., from one or more particular sound sources) even though the actual sounds may be produced by speakers in other locations. The one or more output device(s) 1012 may additionally or alternatively be configured to generate haptics.

In some implementations, the one or more image sensor systems 1014 are configured to obtain image data that corresponds to at least a portion of a physical environment. For example, the one or more image sensor systems 1014 may include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 1014 further include illumination sources that emit light, such as a flash. In various implementations, the one or more image sensor systems 1014 further include an on-camera image signal processor (ISP) configured to execute a plurality of processing operations on the image data.

The memory 1020 includes high-speed random-access memory, such as DRAM, SRAM, DDR RAM, or other random-access solid-state memory devices. In some implementations, the memory 1020 includes non-volatile memory, such as one or more magnetic disk storage devices, optical disk storage devices, flash memory devices, or other non-volatile solid-state storage devices. The memory 1020 optionally includes one or more storage devices remotely located from the one or more processing units 1002. The memory 1020 comprises a non-transitory computer readable storage medium.

In some implementations, the memory 1020 or the non-transitory computer readable storage medium of the memory 1020 stores an optional operating system 1030 and one or more instruction set(s) 1040. The operating system 1030 includes procedures for handling various basic system services and for performing hardware dependent tasks. In some implementations, the instruction set(s) 1040 include executable software defined by binary information stored in the form of electrical charge. In some implementations, the instruction set(s) 1040 are software that is executable by the one or more processing units 1002 to carry out one or more of the techniques described herein.

The instruction set(s) 1040 include user interaction instruction set(s) 1042 configured to, upon execution, perform hand tracking (e.g., determining 3D hand position and configuration) as described herein. The instruction set(s) 1040 may be embodied as a single software executable or multiple software executables.

Although the instruction set(s) 1040 are shown as residing on a single device, it should be understood that in other implementations, any combination of the elements may be located in separate computing devices. Moreover, the figure is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

It will be appreciated that the implementations described above are cited by way of example, and that the present invention is not limited to what has been particularly shown and described hereinabove. Rather, the scope includes both combinations and sub combinations of the various features described hereinabove, as well as variations and modifications thereof which would occur to persons skilled in the art upon reading the foregoing description and which are not disclosed in the prior art.

As described above, one aspect of the present technology is the gathering and use of sensor data that may include user data to improve a user's experience of an electronic device. The present disclosure contemplates that in some instances, this gathered data may include personal information data that uniquely identifies a specific person or can be used to identify interests, traits, or tendencies of a specific person. Such personal information data can include movement data, physiological data, demographic data, location-based data, telephone numbers, email addresses, home addresses, device characteristics of personal devices, or any other personal information.

The present disclosure recognizes that the use of such personal information data, in the present technology, can be used to the benefit of users. For example, the personal information data can be used to improve the content viewing experience. Accordingly, use of such personal information data may enable calculated control of the electronic device. Further, other uses for personal information data that benefit the user are also contemplated by the present disclosure.

The present disclosure further contemplates that the entities responsible for the collection, analysis, disclosure, transfer, storage, or other use of such personal information and/or physiological data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates implementations in which users selectively block the use of, or access to, personal information data. That is, the present disclosure contemplates that hardware or software elements can be provided to prevent or block access to such personal information data. For example, in the case of user-tailored content delivery services, the present technology can be configured to allow users to select to "opt in" or "opt out" of participation in the collection of personal information data during registration for services. In another example, users can select not to provide personal information data for targeted content delivery services. In yet another example, users can select to not provide personal information, but permit the transfer of anonymous information for the purpose of improving the functioning of the device.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences or settings based on non-personal information data or a bare minimum amount of personal information, such as the content being requested by the device associated with a user, other non-personal information available to the content delivery services, or publicly available information.

In some embodiments, data is stored using a public/private key system that only allows the owner of the data to decrypt the stored data. In some other implementations, the data may be stored anonymously (e.g., without identifying and/or personal information about the user, such as a legal name, username, time and location data, or the like). In this way, other users, hackers, or third parties cannot determine the identity of the user associated with the stored data. In some implementations, a user may access their stored data from a user device that is different than the one used to upload the stored data. In these instances, the user may be required to provide login credentials to access their stored data.

Numerous specific details are set forth herein to provide a thorough understanding of the claimed subject matter. However, those skilled in the art will understand that the claimed subject matter may be practiced without these specific details. In other instances, methods apparatuses, or systems that would be known by one of ordinary skill have not been described in detail so as not to obscure claimed subject matter.

Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general-purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

The foregoing description and summary of the invention are to be understood as being in every respect illustrative and exemplary, but not restrictive, and the scope of the invention disclosed herein is not to be determined only from the detailed description of illustrative implementations but according to the full breadth permitted by patent laws. It is to be understood that the implementations shown and described herein are only illustrative of the principles of the present invention and that various modification may be implemented by those skilled in the art without departing from the scope and spirit of the invention.

Exemplary methods, electronic devices, and non-transitory computer-readable storage media are set out in the following items.
1. A method comprising:
   at an electronic device having a processor:
   obtaining live data comprising an image from a camera of the electronic device, the image depicting a hand of a user at a point in time;
   obtaining enrollment data corresponding to a size of at least a portion of a hand, wherein the enrollment data is based on sensor data of the hand of the user obtained prior to the live data being obtained;
   determining parameters for a hand representation based on the live data and the enrollment data, wherein the parameters comprise rotation parameter values corresponding to hand joints and hand pose parameter values corresponding to hand pose; and
   determining a three-dimensional (3D) position and configuration of the hand based on the parameters of the hand representation.
2. The method of item 1, wherein the enrollment data comprises fixed distances between the hand joints of the hand representation, the fixed distances determined based on the sensor data regarding the hand portion of the user obtained prior to the live data being obtained.
3. The method of any of items 1-2, wherein the enrollment data was determined based on an enrollment in which:
   multiple cameras simultaneously capture the sensor data; or
   one or more cameras and a depth sensor simultaneously capture the sensor data.
4. The method of any of items 1-3, wherein the hand representation has a format that enables Bayesian optimization using the live data and the enrollment data.
5. The method of any of items 1-4, wherein the rotation parameter values correspond to angles of hand joints.
6. The method of any of items 1-5, wherein the hand pose parameter values correspond to hand 3D position and orientation.
7. The method of item 6, wherein the hand pose parameter values correspond to wrist position and wrist rotation.
8. The method of any of items 1-7, wherein determining the parameters for the hand representation comprises fitting the live data and enrollment data.
9. The method of item 8, wherein a 3D position of at least a portion of the hand is determined based on the fitting.
10. The method of any of item 1-9 further comprising determining 3D positions and configurations of the hand over time based on a sequence of image in the live data and the enrollment data.
11. The method of item 10 further comprising using a filter to smooth the 3D positions and configurations determined for the hand over time.
12. The method of any of items 10-11 further comprising adjusting the determined 3D positions and configurations based on determining whether the 3D positions and configurations determined for the hand over time deviate from predictions based on motion tracking.
13. The method of any of items 1-12, wherein the live data is obtained via an outward facing sensor on a head-mounted device (HMD) or augmented reality (AR) glasses.
14. An electronic device comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the system to perform operations comprising:
      obtaining live data comprising an image from a camera of the electronic device, the image depicting a hand of a user at a point in time;
      obtaining enrollment data corresponding to a size of at least a portion of a hand, wherein the enrollment data is based on sensor data of the hand of the user obtained prior to the live data being obtained;
      determining parameters for a hand representation based on the live data and the enrollment data, wherein the parameters comprise rotation parameter values corresponding to hand joints and hand pose parameter values corresponding to hand pose; and
      determining a three-dimensional (3D) position and configuration of the hand based on the parameters of the hand representation.
15. The system of item 14, wherein the enrollment data comprises fixed distances between the hand joints of the hand representation, the fixed distances determined based on the sensor data regarding the hand portion of the user obtained prior to the live data being obtained.
16. The system of any of items 14-15, wherein the enrollment data was determined based on an enrollment in which:
   multiple cameras simultaneously capture the sensor data; or
   one or more cameras and a depth sensor simultaneously capture the sensor data.
17. The system of any of items 14-16, wherein the hand representation has a format that enables Bayesian optimization using the live data and the enrollment data.
18. The system of any of items 14-17, wherein the rotation parameter values correspond to angles of hand joints.
19. The system of any of items 14-18, wherein the hand pose parameter values correspond to hand 3D position and orientation.
20. A non-transitory computer-readable storage medium storing program instructions executable via one or more processors to perform operations comprising:
   obtaining live data comprising an image from a camera of the electronic device, the image depicting a hand of a user at a point in time;
   obtaining enrollment data corresponding to a size of at least a portion of a hand, wherein the enrollment data is based on sensor data of the hand of the user obtained prior to the live data being obtained;
   determining parameters for a hand representation based on the live data and the enrollment data, wherein the parameters comprise rotation parameter values corresponding to hand joints and hand pose parameter values corresponding to hand pose; and
   determining a three-dimensional (3D) position and configuration of the hand based on the parameters of the hand representation.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
at an electronic device having a processor:
obtaining live data comprising an image from a camera of the electronic device, the image depicting a hand of a user at a point in time;
obtaining enrollment data corresponding to a size of at least a portion of a hand, wherein the enrollment data is based on sensor data of the hand of the user obtained prior to the live data being obtained;
determining parameters for a hand representation based on the live data and the enrollment data, wherein the parameters comprise rotation parameter values corresponding to hand joints and hand pose parameter values corresponding to hand pose; and
determining a three-dimensional (3D) position and configuration of the hand based on the parameters of the hand representation.

2. The method of claim 1, wherein the enrollment data comprises fixed distances between the hand joints of the hand representation, the fixed distances determined based on the sensor data regarding the hand portion of the user obtained prior to the live data being obtained.

3. The method of any of claims 1-2, wherein the enrollment data was determined based on an enrollment in which:
multiple cameras simultaneously capture the sensor data; or
one or more cameras and a depth sensor simultaneously capture the sensor data.

4. The method of any of claims 1-3, wherein the hand representation has a format that enables Bayesian optimization using the live data and the enrollment data.

5. The method of any of claims 1-4, wherein the rotation parameter values correspond to angles of hand joints.

6. The method of any of claims 1-5, wherein the hand pose parameter values correspond to hand 3D position and orientation.

7. The method of claim 6, wherein the hand pose parameter values correspond to wrist position and wrist rotation.

8. The method of any of claims 1-7, wherein determining the parameters for the hand representation comprises fitting the live data and enrollment data.

9. The method of claim 8, wherein a 3D position of at least a portion of the hand is determined based on the fitting.

10. The method of any of claim 1-9 further comprising determining 3D positions and configurations of the hand over time based on a sequence of image in the live data and the enrollment data.

11. The method of claim 10 further comprising using a filter to smooth the 3D positions and configurations determined for the hand over time.

12. The method of any of claims 10-11 further comprising adjusting the determined 3D positions and configurations based on determining whether the 3D positions and configurations determined for the hand over time deviate from predictions based on motion tracking.

13. The method of any of claims 1-12, wherein the live data is obtained via an outward facing sensor on a head-mounted device (HMD) or augmented reality (AR) glasses.

14. An electronic device comprising:
a non-transitory computer-readable storage medium; and
one or more processors coupled to the non-transitory computer-readable storage medium, wherein the non-transitory computer-readable storage medium comprises program instructions that, when executed on the one or more processors, cause the system to perform operations comprising any one of the methods of claims 1-13.

15. A non-transitory computer-readable storage medium storing program instructions executable via one or more processors to perform operations comprising any one of the methods of claims 1-13.
